# EUROPEAN PATENT SPECIFICATION

(11) **EP 1 511 059 B1**
(45) Date of publication and mention of the grant of the patent: **30.05.2012**
(21) Application number: 04104082.5
(22) Date of filing: 25.08.2004
(51) Int. Cl.: H01J 3/02

(54) **Field emission device**
Feldemissionsanordnung
Dispositif à émission de champ

(30) Priority: 27.08.2003 KR 2003059401
(43) Date of publication of application: 02.03.2005
(73) Proprietor: Electronics and Telecommunications Research Institute, Daejon-Shi (KR)
(72) Inventor: SONG, Yoon Ho, Daejon-Shi (KR); HWANG, Chi Sun, Daejon-Shi (KR); KIM, Kwang Bok, Daejon-Shi (KR)
(74) Representative: Betten & Resch

(56) References cited:
- EP-A- 0 660 368
- EP-A- 0 790 633
- EP-A- 1 115 134
- WO-A-98/54750
- JP-A- 2000 251 783
- JP-A- 2001 110 343
- US-A- 5 793 152
- US-A- 5 850 120
- US-B1- 6 392 333

## Description

### 1. Field of the Invention

The present invention relates to a field emission device, and more particularly, to a field emission device comprising a field emission suppressing gate for suppressing electron emission which is interposed between a cathode and a field emission inducing gate.

### 2. Discussion of Related Art

Field emission devices have been widely used as an electron source of a microwave element, a sensor, a flat panel display, or the like, which emits electrons from a cathode electrode when an electric field is applied to the same in a vacuum or a specific gas atmosphere.

Efficiency of electron emission significantly depends on an element structure, an emitter material, and an emitter shape in the field emission device. At present, the structure of the field emission device is mainly classified into a diode type consisting of a cathode and an anode, and a triode type consisting of a cathode, a gate, and an anode.

The cathode or electric field emitter acts to emit electrons, the gate acts to induce electron emission, and the anode receives the emitted electrons in the triode type field emission device. Since the electric field for electron emission is applied to the gate adjacent to the emitter in the triode type structure, the field emission device may be driven at a low voltage and emission current may be readily controlled as compared to the diode type structure, as a result of the triode type is being actively developed.

Material used for the electric field emitter may include metal, silicon, diamond, diamond like carbon, carbon nanotube, carbon nanofiber, etc., the carbon nanotube and nanofiber are thin and pointed, and stable in themselves, so that they are widely used for the emitter material.

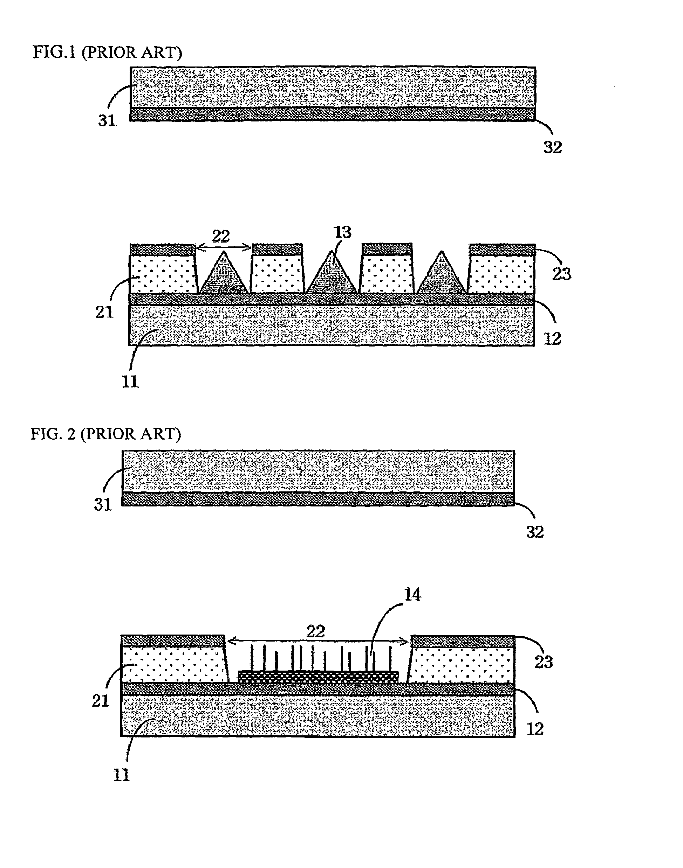

Hereinafter, a Spindt-type field emission device, which is one of the structures widely used among conventional field emission devices, will be described. FIG. 1 is a diagram illustrating a schematic configuration of a Spindt-type field emission device in accordance with the related art.

The Spindt-type field emission device consists of a cathode, a gate, and an anode. The cathode is comprised of a cathode substrate 11, a cathode electrode 12 formed on the cathode substrate, a metal tip 13 with an insulator 21 surrounding the metal tip 13 and having an internal gate opening 22, and a gate electrode 23 formed on the insulator 21. An anode electrode 32 is formed on an anode substrate 31, which is arranged to face the above-mentioned whole cathode and gate structure.

In order to fabricate such a field emission device, the gate opening 22 is formed to have a thickness of about 1um on the insulator 21 and a sacrificial isolation layer is formed on top of that. Electron beam evaporation is performed to thereby form a self-aligned metal tip 13.

Thus, while a fine pattern should be formed and a self-alignment scheme by means of electron beam evaporation should be performed in the above-mentioned procedure, there is difficulty in application of such a field emission device for implementing a large area display.

Efforts to fabricate the field emission device with a more simplified process have been made to cope with such problem, and the carbon nanotube and carbon nanofiber among electric field emitter materials have been used to meet these efforts.

The carbon nanotube and carbon nanofiber have very small diameters, on the order of nanometer, in themselves while having a long length, on the order of micrometer, so that they are highly suitable for an electron emission source. However, when they are used as the electron emission source by means of an electric field, it is not easy to form a self-aligned electron emitting gate so as to have a structure capable of readily inducing and controlling electron emissions compared to the Spindt-type metal tip of FIG. 1.

FIG. 2 is a diagram illustrating a schematic configuration of a field emission device for a carbon nanotube or carbon nanofiber in accordance with the related art. FIG. 2 differs from FIG. 1 in that the carbon nanotube or carbon nanofiber used for the electric field emitter 14 of the field emission device of FIG. 2 is exposed through a gate opening with a length of 10 um formed within an insulator.

Thus, the emitted electrons flow into the gate to result in a leakage current. In addition, the gate opening is larger compared to the thickness of the insulator, which causes difficulty in controlling electron emission due to an anode voltage, and causes the emitted electron beam to be widely spread when it reaches the anode as compared to its emitting instance.

These phenomena deteriorate the properties of the field emission device, and in particular, they may cause a significant problem when the field emission device is applied for a flat panel display.

Prior art document EP 0660368 (A1) discloses An electron field emission device including a field emissive cathode which may include a plurality of sharp field emitter tips. First and second grids are located between the cathode and an anode. The grids comprise parallel strips of electrically conductive material, those of the first grid being arranged orthogonal to those of the second. Application of suitable voltages to the grids enable selected regions of the cathode to be made electron emissive and produce collimated electron beams. The anode may be phosphor coated to produce a visible display or an infra-red image may be produced. Relatively low voltages may be used to switch the regions on and off. As the beams are collimated, the anode may be located a relatively large distance from the cathode, enabling high voltage phosphors to be used.

EP 0790633 (A2) provides a Schottky emission (SE) electron source for an apparatus utilising an electron beam, such as an electron microscope or electron beam lithography machine, has a needle with a tip having a cone angle of less than 15° and a radius of curvature of less than 0.5 µm. In an electron gun using such a SE electron source, the range of variations in probe current caused by a given variation in control voltage increases. Therefore, one extraction voltage setting is sufficient. Furthermore, the value of the extraction voltage decreases. Damage to the needle tip due to electric discharge is prevented. This adds to the stability of the electron gun.

US 5,850,120 provides an electron gun including a field emission cold cathode having a first electric potential, a primary gate electrode having a first opening around the top of the cathode and having a second electric potential which is higher than the first electric potential for causing an electron emission from the top of the cathode, and a second gate electrode having a second opening around the top of the cathode and having a third electric potential which is higher than the first electric potential and lower than the second electric potential, wherein a first voltage defined as a difference between the first and the second electric potentials varies in proportion to a second voltage defined as a difference between the first and the third electric potentials so as to provide a current-voltage characteristic having an apparent gamma-property. The apparent gamma-property is such that the luminous output of a fluorescent substance of an anode is directly proportional to a signal voltage.

### SUMMARY OF THE INVENTION

The present invention is directed to a new type of field emission device.

The present invention is also directed to a field emission device, which reduces a leakage current flowing into the gate as an electron emitting electrode and facilitates control of electron emission.

The present invention is also directed to a field emission device, which allows most electrons to be emitted in the carbon nanotube or carbon nanofiber arranged near the gate electrode to thereby overcome the potential leakage current and spreading of the electron beam.

One aspect of the present invention is to provide a field emission device according to claim 1

The field emission suppressing gate is interposed between the cathode and the field emission inducing gate for suppressing the electron emission.

### BRIEF DESCRIPTION OF THE DRAWINGS

FIG. 1 is a diagram illustrating a schematic configuration of a Spindt-type field emission device in accordance with the related art.

FIG. 2 is a diagram illustrating a schematic configuration of a field emission device for a carbon nanotube or carbon nanofiber in accordance with the related art.

FIG. 3 is a diagram illustrating a schematic configuration of a field emission device in accordance with a first embodiment of the present invention.

FIG. 4 is a cross sectional view for explaining a configuration of one dot pixel in a field emission device in accordance with a first embodiment of the present invention.

FIG. 5 is a plan view of a pixel array for explaining the structure in which the pixels of FIG. 4 are arranged in a matrix form.

FIG. 6 is a diagram illustrating a schematic configuration of a field emission device in accordance with a second embodiment of the present invention.

FIG. 7 is a cross sectional view for explaining a configuration of one dot pixel in a field emission device in accordance with a second embodiment of the present invention.

FIG. 8 is a plan view of a pixel array for explaining the structure in which the pixels of FIG. 7 are arranged in a matrix form.

### DETAILED DESCRIPTION OF PREFERRED EMBODIMENTS

The present invention will now be described more fully hereinafter with reference to the accompanying drawings, in which preferred embodiments of the field emission device are shown. This invention may, however, be embodied in different forms and should not be construed as limited to the embodiments set forth herein. Rather, these embodiments are provided so that this disclosure will be thorough and complete, and will fully convey the scope of the invention to those skilled in the art.

First embodiment

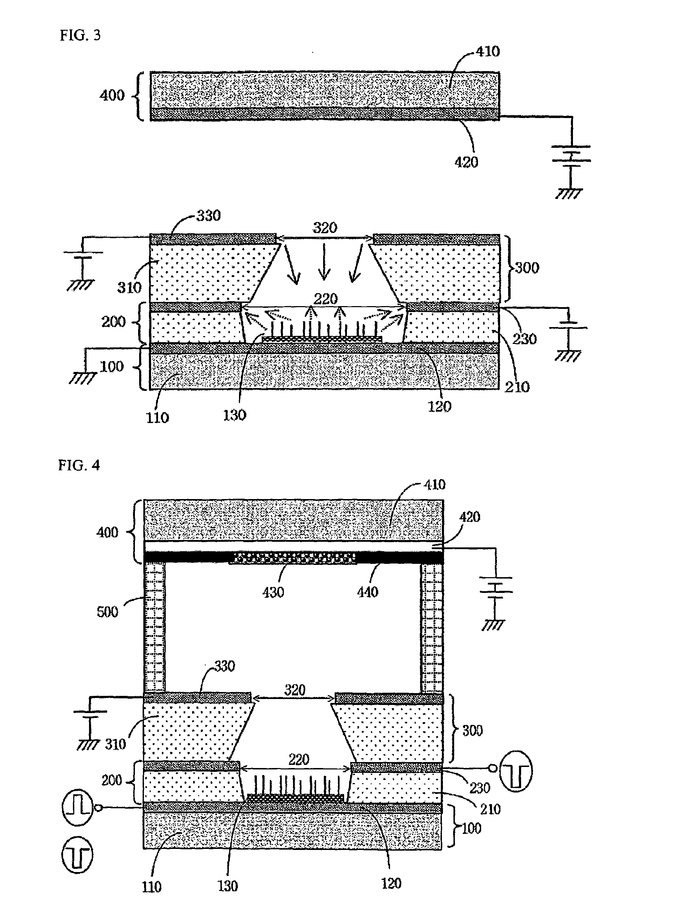

FIG. 3 is a diagram illustrating a schematic configuration of a field emission device in accordance with a first embodiment of the present invention.

The field emission device of FIG. 3 comprises a cathode 100, a field emission suppressing gate 200, a field emission inducing gate 300, and an anode 400. This field emission device corresponds to one dot pixel in the field emission display, and a plurality of dot pixels are arranged in a matrix form and a plurality of interconnection lines are also included to apply various signals to each of the dot pixels in an actual process for fabricating the field emission display.

Each of the cathode 100, field emission suppressing gate 200, field emission inducing gate 300, and anode 400 may be formed on a separate substrate, or the cathode 100 and field emission suppressing gate 200 may be formed on one substrate, and the field emission inducing gate 300 and anode 400 may be formed on another substrate. Alternatively, the cathode 100, field emission suppressing gate 200 and field emission inducing gate 300 may be formed on one substrate, and the anode 400 may be formed on another substrate.

The cathode 100 includes a cathode substrate 110, for example, formed of an insulating substrate such as glass, ceramic or polyimide, a cathode electrode 120 formed of metal, metal compound, etc., on a predetermined region of the cathode substrate 110, and a (thin or thick) film type electric field emitter 130 formed of diamond, diamond like carbon, carbon nanotube, carbon nanofiber, etc. on some portion of the cathode electrode 120. The cathode substrate has, for example, a thickness of about 0.5mm to 5mm, and the cathode electrode has a thickness of about 0.1um to 1.0um.

The field emission suppressing gate 200 includes a first insulator 210 formed of an oxide layer, a nitride layer, etc., a field emission suppressing gate opening 220 formed to penetrate the first insulator 210, and a field emission suppressing gate electrode 230 formed of metal, metal compound, etc. on some portion of the first insulator 210.

For example, the first insulator 210 and the field emission suppressing gate electrode 230 have a thickness of about 0.5um to 20um, and a thickness of about 0.1um to 1.0um, respectively, and the field emission suppressing gate opening 220 has a diameter of about 5um to 100um.

The field emission inducing gate 300 includes a second insulator 310 formed of a glass material, an oxide layer, a nitride layer, etc., a field emission inducing gate opening 320 formed to penetrate the second insulator 310, and a field emission inducing gate electrode 330 formed of metal, metal compound, etc. on some portion of the second insulator 310. For example, the second insulator 310 and the field emission inducing gate electrode 330 may be formed to have thicknesses of 50um to 500um and 0.1um to 1.0um, respectively. The field emission inducing gate opening 320 may has a diameter of 50um to 500um.

The anode 400 has an anode electrode 420 that may be formed of metal, metal compound, transparent electrode, etc. on an anode substrate 410. The anode substrate 410 is preferably formed of a transparent substrate, and the anode electrode 420 is preferably formed of a transparent electrode. For example, the anode substrate 410 and the anode electrode 420 may be formed to have thicknesses of 0.5mm to 5.0mm, and about 0.1um, respectively.

The cathode 100, field emission suppressing gate 200, field emission inducing gate 300, and anode 400 are vacuum-packaged to have the electric field emitter 130 of the cathode 100 face the anode electrode 420 of the anode 400 through the field emission suppressing gate opening 220 and the field emission inducing gate opening 320.

The electric field emitter 130 may be formed as a thin or thick film, or may be formed of diamond, diamond like carbon, carbon nanotube, carbon nanofiber, etc. using catalytic metal on the cathode electrode 120, or may be formed by means of mixing and printing of paste containing powder type diamond, diamond like carbon, carbon nanotube, carbon nanofiber, which are already synthesized.

The size (diameter) of the field emission suppressing gate opening 220 in the field emission suppressing gate 200 is preferably adjusted to be one to twenty times the thickness of the first insulator 210, which allows electrons emitted from the electric field emitter 130 to be suppressed by means of the field emission suppressing gate electrode 230. When the size exceeds twenty times the thickness of the first insulator, the field emission suppressing gate 200 has difficulty in blocking the electric field induced to the electric field emitter 130 by the field emission inducing gate 300, so that it is difficult to suppress the electron emission from the electric field emitter 130 due to the field emission inducing gate 300. The thickness of the insulator 210 is preferably in a range of about 0.5um to about 20um.

The field emission inducing gate 300, as well as the second insulator, acts to suppress the electric field emission by the anode voltage, and may have the effect of focusing the electron beam to allow the electrons emitted from the electric field emitter 130 to move toward a specific region of the anode.

The field emission inducing gate opening 320 of the field emission inducing gate 300 preferably has an inclined inner wall for penetrating the second insulator 310 such that its opening size becomes smaller toward the anode 400 from the cathode 100, so that the electrons emitted from the electric field emitter 130 may be focused on a specific region of the anode electrode 420.

In addition, the size (diameter) of the field emission inducing gate opening 320 of the field emission inducing gate 300 is one to three times the thickness of the second insulator 310, which does not allow the electric field by the anode electrode 420 to be induced to the electric field emitter 130 to thereby suppress the electron emission. When the size exceeds three times the thickness of the second insulator, the field emission inducing gate 300 may not block the electric field induced to the electric field emitter 130 due to the anode voltage applied to the anode electrode 420, which causes difficulty in suppressing the electric field emitter 130 from performing the electric field emission due to the anode voltage. The preferred thickness of the second insulator 310 is in a range of about 50um to 500um.

The gate electrode 330 of the field emission inducing gate 300 is formed so as not to cover the inclined inner wall of the field emission inducing gate opening 320, so that the electrons emitted from the electric field emitter 130 may be prevented from flowing to the field emission inducing gate electrode 330.

The cathode 100, field emission suppressing gate 200, field emission inducing gate 300, and anode 400 are attached to face one another by means of spacers (not shown).

In addition, an electric field by the field emission inducing gate electrode 330 is applied toward the electric field emitter 130 so as to have the electrons emitted from the electric field emitter 130 (See solid line arrows shown in FIG. 3) , and an electric field by the field emission suppressing gate electrode 230 is applied toward a direction opposite to that of the electric field applied to the electric field emitter 130 by means of the field emission inducing gate electrode (See dotted line arrows shown in FIG. 3) so that the electrons are not emitted from the electric field emitter 130. The potential of the field emission inducing gate electrode 330 may be adjusted to be higher than that of the electric field emitter 130, and the potential of the field emission suppressing gate electrode 230 may be adjusted to be lower than that of the electric field emitter 130.

To that end, as shown in FIG. 3, the electric field emitter 130 may be coupled to a ground state, and a positive voltage and a negative voltage may be applied to the field emission inducing gate electrode 330 and the field emission suppressing gate electrode 230, respectively.

Next, a method for fabricating a field emission display using the field emission device will be described in accordance with preferred embodiments of the present invention.

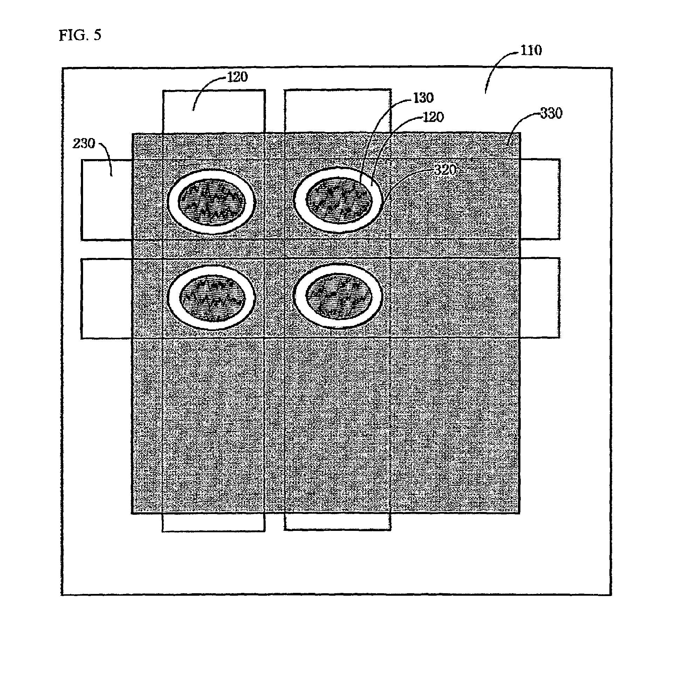

FIG. 4 is a cross sectional view for explaining a configuration of one dot pixel in a field emission display in accordance with a first embodiment of the present invention, and FIG. 5 is a plan view of a pixel array for explaining the structure in which the pixels of FIG. 4 are arranged in a matrix form.

Referring to FIG. 4, an anode 400 comprises a transparent electrode 420, phosphor materials 430 of Red (R), Green (G) and Blue (B) colors on some portion of the transparent electrode 420, and a black matrix 440 interposed between adjacent phosphor materials on an anode substrate 410 formed of a transparent insulating substrate such as glass. The cathode 100, field emission suppressing gate 200, field emission inducing gate 300, and the anode 400 are vacuum-packaged and supported by spacers 500 to have the arranged electric field emitter 130 of the cathode 100 face the phosphor materials 430 of the anode through the field emission suppressing gate opening 220 of the field emission suppressing gate 200 and the field emission inducing gate opening 320 of the field emission inducing gate 300. In this case, the spacer 500 acts to maintain a space between the anode 400, and the cathode 100, field emission suppressing gate 200, field emission inducing gate 300; the spacer is not necessarily formed in all pixels.

Hereinafter, an example of driving the field emission device will be described in detail.

First, a constant direct current voltage (e.g. 100V to 1500V) is applied to the field emission inducing gate electrode 330 of the field emission inducing gate 300 to induce electrons emitted from the electric field emitter 130 of the cathode 100 while a direct current high voltage (e.g. 1000V to 15000V) is concurrently applied to the anode electrode 420 of the anode 400 to accelerate the emitted electrons with high energy. A display scan pulse signal having a negative voltage of 0V to about -50V is applied to the field emission suppressing gate electrode 230 and a data pulse signal having a positive voltage of 0V to about 50V or a negative voltage of 0V to about - 50V is applied to the cathode electrode 120 to thereby display images.

In this case, gray representation of the display may be obtained by adjusting the pulse amplitude or pulse width of the data signal applied to the cathode electrode 120.

Referring to FIG. 5, a plurality of dot pixels shown in FIG. 4 are arranged in a matrix form, wherein the cathode electrode 120 and the field emission suppressing gate electrode 230 are arranged as column and row addressing electrodes, respectively. The anode 400 is not shown in FIG. 5 and the size of the electric field emitter 130 is shown to be smaller than the field emission inducing gate opening 320. However, it is apparent that the size can be larger than the field emission inducing gate opening 320 in actual implementation.

Second embodiment

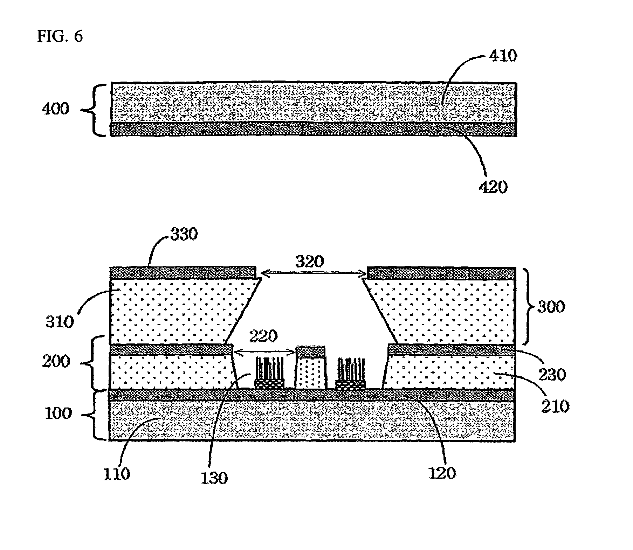

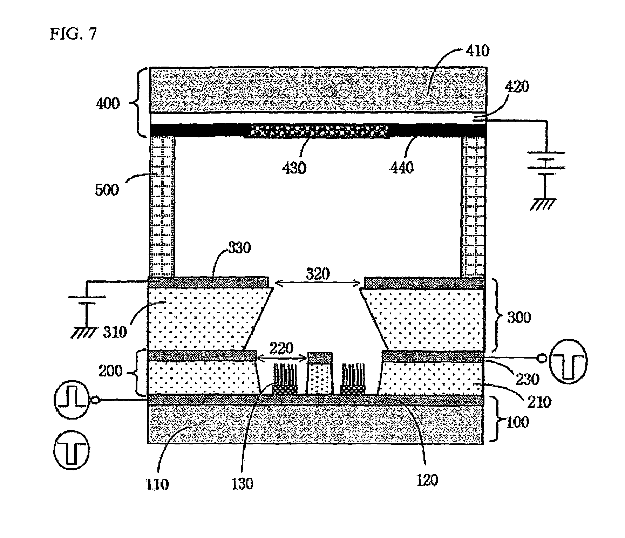

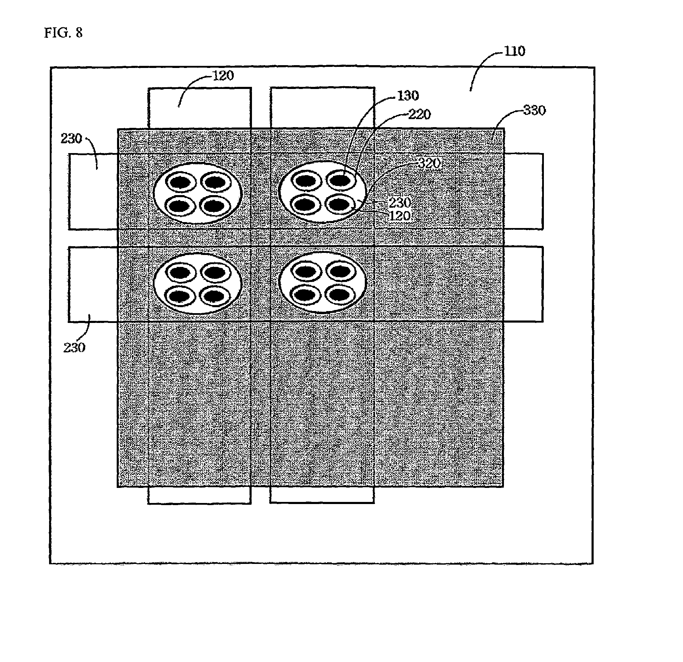

Next, the field emission device in accordance with a second embodiment of the present invention will be described in detail with reference to FIG. 6 to FIG. 8. For simplicity of description, the difference between the first and second embodiments will be described in detail. FIG. 6 is a diagram illustrating a schematic configuration of a field emission device in accordance with the second embodiment of the present invention. FIG. 7 is a cross sectional view for explaining a configuration of one dot pixel in a field emission display in accordance with the second embodiment of the present invention. FIG. 8 is a plan view of a pixel array for explaining the structure in which the pixels of FIG. 7 are arranged in a matrix form.

The second embodiment differs from the first embodiment in that the field emission suppressing gate opening is separated into at least two regions. Each region has a separate electric field emitter.

In accordance with the second embodiment, it is advantageous that the field emission suppressing effect using the field emission suppressing gate may be enhanced. Thus, field emission may be readily focused and controlled while maximizing the current.

The size of each electric field emitter may be determined in a range of about 0.5um to about 10um, and the size of the field emission suppressing gate opening may be determined in a range of about 1um to 10um. In the meantime, the voltage of the field emission suppressing gate may be decreased or the current density of field emission may be increased, as compared to the first embodiment, in consideration of actual driving conditions.

In accordance with the above-mentioned configurations, an electric field necessary for field emission is applied through the gate electrode of the field emission inducing gate when the field emission device of the present invention is applied to the field emission display, so that the space between the anode and the cathode may be readily adjusted and a high voltage may be applied to the anode, which leads to a significant enhancement of brightness of the field emission display.

The field emission device of the present invention may significantly improve problems such as gate leakage current, electron emission due to the anode voltage, and electron beam spreading which occur in the conventional carbon field emission device.

In addition, the voltage applied to the field emission inducing gate electrode suppresses the electron emission from the electric field emitter due to the anode voltage and forms uniform electric potential between the anode and the gate, so that local arcing may be prevented while the life span of the field emission display may be significantly enhanced.

The field emission inducing gate opening having the inclined inner wall of the field emission inducing gate acts to focus the electrons emitted from the electric field emitter on the phosphor material of the corresponding anode, which leads to fabrication of the field emission display with a high resolution.

While the present invention has been described with reference to particular embodiments, it is understood that the disclosure has been made for the purpose of illustrating the invention by way of examples and is not intended to limit the scope of the invention. One skilled in the art would understand that amendments and changes may be need to the present invention without departing from the scope of the invention.

## Claims

1. A field emission device comprising:
a cathode (100) including a cathode substrate (110), a cathode electrode (120) formed on the cathode substrate, and an electric field emitter (130) formed on a portion of the cathode electrode;
a field emission suppressing gate (200) formed on the cathode substrate to surround the electric field emitter;
a field emission inducing gate (300) formed on the field emission suppressing gate; and
an anode (400) including an anode electrode facing the electric field emitter for receiving electrons emitted from the electric field emitter,
wherein the field emission suppressing gate suppresses electron emission from the electric field emitter, and the field emission inducing gate induces electron emission from the electric field emitter;
wherein the field emission inducing gate includes a second insulator (310) having a field emission inducing gate opening (320) and a field emission inducing gate electrode (330) formed on the second insulator ; and
wherein the field emission inducing gate opening (320) is formed in the second insulator to have an inclined inner wall such that, starting from the field emission inducing gate, the size of the opening becomes smaller toward the anode from the cathode.

2. The field emission device as claimed in claim 1, wherein the field emission suppressing gate includes a first insulator (210) having an inner field emission suppressing gate opening (220) so as to electrically insulate from the cathode electrode and the electric field emitter, and a field emission suppressing gate electrode formed on the first insulator.

3. The field emission device as claimed in claim 2, wherein the size of the field emission suppressing gate opening is one to twenty times the thickness of the first insulator.

4. The field emission device as claimed in claim 3, wherein the size of the field emission inducing gate opening is one to three times the thickness of the second insulator.

5. The field emission device as claimed in claim 1 to 4, wherein the field emission inducing gate electrode is formed not to cover the inner wall of the field emission inducing gate opening.

6. The field emission device as claimed in one of claims 1 to 5, wherein the electric field emitter includes a carbon electric field emitter capable of being formed of any one of diamond, diamond like carbon, carbon nanotube, and carbon nanofiber.

7. The field emission device as claimed in claim 6, wherein the carbon electric field emitter is formed by direct growing any one of diamond, diamond like carbon, carbon nanotube, and carbon nanofiber on the cathode electrode by means of catalytic metal.

8. The field emission device as claimed in claim 6, wherein the carbon electric field emitter is formed by mixing and printing with paste any one of powder type diamond, diamond like carbon, carbon nanotube, and carbon nanofiber.

9. The field emission device as claimed in one of claims 1 to 8, wherein each of the cathode, field emission suppressing gate, field emission inducing gate, and anode are formed on a separate substrate.

10. The field emission device as claimed in one of claims 1 to 8, wherein the cathode and the field emission suppressing gate are formed on one substrate and the field emission inducing gate and anode are formed on another substrate.

11. The field emission device as claimed in one of claims 1 to 8, wherein the cathode, field emission suppressing gate and field emission inducing gate are formed on one substrate and the anode is formed on another substrate.

12. The field emission device as claimed in one of claims 1 to 8, wherein the field emission suppressing gate, field emission inducing gate, and anode are vacuum-packaged to have the electric field emitter of the cathode face the anode electrode of the anode through the field emission suppressing gate opening and the field emission inducing gate opening.

13. The field emission device as claimed in one of claims 1 to 12, including means for applying a constant direct current voltage is applied to the field emission inducing gate electrode to induce electrons emitted from the electric field emitter of the cathode, and including means for applying scan signal having a negative voltage to the field emission suppressing gate, and including means for applying a data signal having any one of positive and negative voltages to the cathode so that an image is represented.

14. The field emission device as claimed in claim 13, including means for displaying including means for gray representation by adjusting any one of a pulse amplitude and a pulse width of the data signal.

15. The field emission device as claimed in one of claims 1 to 14, wherein the anode includes a transparent substrate, a transparent electrode formed on the transparent substrate, phosphor materials of colors on a portion of the transparent electrode, and a black matrix interposed between adjacent phosphor materials.

16. The field emission device as claimed in one of claims 1 to 15, wherein the cathode, field emission suppressing gate, and field emission inducing gate are supported by spacers to face the anode.

17. The field emission device as claimed in one of claims 1 to 16, wherein the field emission suppressing gate is separated to include at least two openings, and each opening of the field emission suppressing gate include the electric field emitter (130) therein.

18. The field emission device as claimed in one of claims 1 to 17, including means for applying an electric field to the field emission inducing gate to allow electrons to be emitted from the electric field emitter, and including means for applying an electric field to the field emission suppressing gate in a direction opposite to that of the electric field induced to the electric field emitter due to the field emission inducing gate to suppress the electron emission from the electric field emitter.

## Patentansprüche

1. Feldemissionsvorrichtung, umfassend:
eine Kathode (100) mit einem Kathodensubstrat (110), einer auf dem Kathodensubstrat ausgebildeten Kathodenelektrode (120) und einem auf einem Teil der Kathodenelektrode ausgebildeten elektrischen Feldemitter (130);
einem Feldemissionsunterdrückungs-Gate (200), das so auf dem Kathodensubstrat ausgebildet ist, es den elektrischen Feldemitter umgibt;
einem Feldemissionsinduzierungs-Gate (300), das auf dem Feldemissionsunterdrückungs-Gate ausgebildet ist; und
eine Anode (400) mit einer Anodenelektrode, die dem elektrischen Feldemitter gegenüberliegt, für der von dem elektrischen Feldemitter emittierten Elektronen,
wobei das Feldemissionsunterdrückungs-Gate Elektronenemission von dem elektrischen Feldemitter unterdrückt und das Feldemissionsinduzierungs-Gate Elektronenemission von dem elektrischen Feldemitter induziert;
das Feldemissionsinduzierungs-Gate einen zweiten Isolator (310) mit einer Feldemissionsinduzierungs-Gate-Öffnung (320) und eine auf dem zweiten Isolator ausgebildete Feldemissionsinduzierungs-Gate-Elektrode (330) enthält; und
wobei die Feldemissionsinduzierungs-Gate-Öfinung (320) so in dem zweiten Isolator ausgebildet ist, dass sie eine schiefe Innenwand aufweist, derart, dass ausgehend von dem Feldemissionsinduzierungs-Gate die Größe der Öffnung in Richtung auf die Anode von der Kathode her kleiner wird.

2. Feldemissionsvorrichtung wie in Anspruch 1 beansprucht, wobei das Feldemissionsunterdrückungs-Gate einen ersten Isolator (210) mit einer inneren Feldemissionsunterdrückungs-Gate-Öfinung (220), um von der Kathodenelektrode und dem elektrischen Feldemitter elektrisch zu isolieren, und eine auf dem ersten Isolator ausgebildete Feldemissionsunterdrückungs-Gate-Elektrode enthält.

3. Feldemissionsvorrichtung wie in Anspruch 2 beansprucht, wobei die Größe der Feldemissionsunterdrückungs-Gate-Öffnung ein bis zwanzig mal die Dicke des ersten Isolators ist.

4. Feldemissionsvorrichtung wie in Anspruch 3 beansprucht, wobei die Größe der Feldemissionsinduzierungs-Gate-Öffnung ein bis drei mal die Dicke des zweiten Isolators ist.

5. Feldemissionsvorrichtung wie Anspruch 1 bis 4 beansprucht, wobei die Feldemissionsinduzierungs-Gate-Elektrode so ausgebildet ist, dass sie die Innenwand der Feldemissionsinduzierungs-Gate-Öffnung nicht bedeckt.

6. Feldemissionsvorrichtung wie in einem der Ansprüche 1 bis 5 beansprucht, wobei der elektrische Feldemitter einen elektrischen Feldemitter aus Kohlenstoff enthält, der geeignet ist, aus einem der Materialien Diamant, diamantartiger Kohlenstoff, Kohlenstoff-Nanoröhrchen und Kohlenstoff-Nanofaser ausgebildet zu werden.

7. Feldemissionsvorrichtung wie in Anspruch 6 beansprucht, wobei der elektrische Feldemitter aus Kohlenstoff durch direktes Aufwachsen eines der Materialien Diamant, diamantartiger Kohlenstoff, Kohlenstoff-Nanoröhrchen und Kohlenstoff-Nanofaser auf der Kathodenelektrode mittels Katalytmetall ausgebildet ist.

8. Feldemissionsvorrichtung wie in Anspruch 6 beansprucht, wobei der elektrische Feldemitter aus Kohlenstoff durch Mischen und Drucken mit Paste von einem pulvrigen Material der Materialien Diamant, diamantartiger Kohlenstoff, Kohlenstoff-Nanoröhrchen und Kohlenstoff-Nanofaser ausgebildet ist.

9. Feldemissionsvorrichtung wie in einem der Ansprüche 1 is 8 beansprucht, wobei die Kathode, das Feldemissionsunterdrückungs-Gate, das Feldemissionsinduzierungs-Gate und die Anode jeweils auf einem getrennten Substrat ausgebildet sind.

10. Feldemissionsvorrichtung wie in einem der Ansprüche 1 bis 8 beansprucht, wobei die Kathode und das Feldemissionsunterdrückungs-Gate auf einem Substrat ausgebildet sind und das Feldemissionsinduzierungs-Gate und die Anode auf einem anderen Substrat ausgebildet sind.

11. Feldemissionsvorrichtung wie in einem der Ansprüche 1 bis 8 beansprucht, wobei die Kathode, das Feldemissionsunterdrückungs-Gate und das Feldemissionsinduzierungs-Gate auf einem Substrat ausgebildet sind und die Anode auf einem anderen Substrat ausgebildet ist.

12. Feldemissionsvorrichtung wie in einem der Ansprüche 1 bis 8 beansprucht, wobei das Feldemissionsunterdrückungs-Gate, das Feldemissionsinduzierungs-Gate und die Anode vakuumverpackt sind, so dass der elektrische Feldemitter der Kathode der Anodenelektrode der Anode durch die Feldemissionsunterdrückungs-Gate-Öffnung und die Feldemissionsinduzierungs-Gate-Öffnung hindurch gegenüberliegt.

13. Feldemissionsvorrichtung wie in einem der Ansprüche 1 bis 12 beansprucht, mit Mitteln zum Anlegen einer konstanten Gleichspannung wird angelegt an die Feldemissionsinduzierungs-Gate-Elektrode, um von dem elektrischen Feldemitter der Kathode emittierte Elektronen zu induzieren, und mit Mitteln zum Anlegen eines Abtastsignals mit einer negativen Spannung an das Feldemissionsunterdrückungs-Gate, und mit Mitteln zum Anlegen eines Datensignals mit irgendeiner von positiven und negativen Spannungen an die Kathode, so dass ein Bild dargestellt wird.

14. Feldemissionsvorrichtung wie in Anspruch 13 beansprucht, mit Mitteln zum Anzeigen einer Graudarstellung durch Einstellen irgendeiner von einer Pulsamplitude und einer Pulsbreite des Datensignals.

15. Feldemissionsvorrichtung wie in einem der Ansprüche 1 bis 14 beansprucht, wobei die Anode ein transparentes Substrat, eine auf dem transparenten Substrat ausgebildete transparente Elektrode, Farben-Phosphormaterialien auf einem Teil der transparenten Elektrode und eine zwischen benachbarten Phosphormaterialien angeordnete schwarze Matrix enthält.

16. Feldemissionsvorrichtung wie in einem der Ansprüche 1 bis 15 beansprucht, wobei die Kathode, das Feldemissionsunterdrückungs-Gate und das Feldemissionsinduzierungs-Gate von Abstandshaltern gestützt werden, so dass sie der Anode gegenüberliegen.

17. Feldemissionsvorrichtung wie in einem der Ansprüche 1 bis 16 beansprucht, wobei das Feldemissionsunterdrückungs-Gate abgeteilt ist, so dass es mindestens zwei Öffnungen enthält, und jede Öffnung des Feldemissionsunterdrückungs-Gate den elektrischen Feldemitter (130) darin enthält.

18. Feldemissionsvorrichtung wie in einem der Ansprüche 1 bis 17 beansprucht, mit Mitteln zum Anlegen eines elektrischen Feldes an das Feldemissionsinduzierungs-Gate, damit Elektronen von dem elektrischen Feldemitter emittiert werden können, und mit Mitteln zum Anlegen eines elektrischen Feldes an das Feldemissionsunterdrückungs-Gate in einer Richtung entgegengesetzt zu jener des aufgrund des Feldemissionsinduzierungs-Gate zu dem elektrischen Feldemitter induzierten elektrischen Feldes, um die Elektronenemission von dem elektrischen Feldemitter zu unterdrücken.

## Revendications

1. Dispositif à émission de champ comprenant :
une cathode (100) comprenant un substrat de cathode (110), une électrode de cathode (120) formée sur le substrat de cathode, et un émetteur de champ électrique (130) formé sur une portion de l'électrode de cathode ;
une grille de suppression d'émission de champ (200) formée sur le substrat de cathode pour entourer l'émetteur de champ électrique ;
une grille d'induction d'émission de champ (300) formée sur la grille de suppression d'émission de champ ; et
une anode (400) comprenant une électrode d'anode faisant face à l'émetteur de champ électrique pour recevoir des électrons émis depuis l'émetteur de champ électrique,
dans lequel la grille de suppression d'émission de champ supprime une émission d'électrons en provenance de l'émetteur de champ électrique, et la grille d'induction d'émission de champ induit une émission d'électrons en provenance de l'émetteur de champ électrique ;
dans lequel la grille d'induction d'émission de champ comporte un second insolant (310) ayant une ouverture de grille d'induction d'émission de champ (320) et une électrode de grille d'induction d'émission de champ (330) formée sur le second isolant ; et
dans lequel l'ouverture de grille d'induction d'émission de champ (320) est formée dans le second insolant afin de comporter une paroi interne inclinée de sorte que, en partant de la grille d'induction d'émission de champ, la taille de l'ouverture rapetisse en direction de l'anode en partant de la cathode.

2. Dispositif à émission de champ selon la revendication 1, dans lequel la grille de suppression d'émission de champ comporte un premier isolant (210) ayant une ouverture de grille de suppression d'émission de champ interne (220) afin d'isoler électriquement de l'électrode de cathode et de l'émetteur de champ électrique, et une électrode de grille de suppression d'émission de champ formée sur le premier isolant.

3. Dispositif à émission de champ selon la revendication 2, dans lequel la taille de l'ouverture de la grille de suppression d'émission de champ est d'une à vingt fois l'épaisseur du premier isolant.

4. Dispositif à émission de champ selon la revendication 3, dans lequel la taille de l'ouverture de grille d'induction d'émission de champ est d'une à trois fois l'épaisseur du second isolant.

5. Dispositif à émission de champ selon les revendications 1 à 4, dans lequel l'électrode de grille d'induction d'émission de champ est formée afin de ne pas couvrir la paroi interne de l'ouverture de grille d'induction d'émission de champ.

6. Dispositif à émission de champ selon l'une des revendications 1 à 5, dans lequel l'émetteur de champ électrique comporte un émetteur de champ électrique en carbone apte à être formé de l'un quelconque du diamant, carbone de type diamant, nanotube de carbone et nanofibre de carbone.

7. Dispositif à émission de champ selon la revendication 6, dans lequel l'émetteur de champ électrique en carbone est formé par croissance directe de l'un quelconque du diamant, carbone de type diamant, nanotube de carbone, et nanofibre de carbone sur l'électrode de cathode au moyen de métal catalytique.

8. Dispositif à émission de champ selon la revendication 6, dans lequel l'émetteur de champ électrique en carbone est formé en mélangeant et en imprimant avec une pâte l'un quelconque du diamant de type poudre, carbone de type diamant, nanotube de carbone et nanofibre de carbone.

9. Dispositif à émission de champ selon l'une des revendications 1 à 8, dans lequel chacune de la cathode, de la grille de suppression d'émission de champ, de la grille d'induction d'émission de champ et de l'anode sont formées sur un substrat séparé.

10. Dispositif à émission de champ selon l'une des revendications 1 à 8, dans lequel la cathode et la grille de suppression d'émission de champ sont formées sur un substrat, et la grille d'induction d'émission de champ et l'anode sont formées sur un autre substrat.

11. Dispositif à émission de champ selon l'une des revendications 1 à 8, dans lequel la cathode, la grille de suppression d'émission de champ et la grille d'induction d'émission de champ sont formées sur un substrat et l'anode est formée sur un autre substrat.

12. Dispositif à émission de champ selon l'une des revendications 1 à 8, dans lequel la grille de suppression d'émission de champ, la grille d'induction d'émission de champ et l'anode sont conditionnées sous vide af in que l'émetteur de champ électrique de la cathode soit face à l'électrode d'anode de l'anode à travers l'ouverture de grille de suppression d'émission de champ et l'ouverture de grille d'induction d'émission de champ.

13. Dispositif à émission de champ selon l'une des revendications 1 à 12, comportant des moyens pour appliquer une tension continue constante à l'électrode de grille d'induction d'émission de champ afin d'induire des électrons émis par l'émetteur de champ électrique de la cathode, et comportant des moyens pour appliquer un signal de balayage ayant une tension négative à la grille de suppression d'émission de champ, et comportant des moyens pour appliquer un signal de données ayant l'une quelconque d'une tension positive et d'une tension négative à la cathode afin qu'une image soit représentée.

14. Dispositif à émission de champ selon la revendication 13, comportant des moyens pour afficher une représentation grise en ajustant l'une quelconque d'une amplitude d'impulsion et d'une largeur d'impulsion du signal de données.

15. Dispositif à émission de champ selon l'une des revendications 1 à 14, dans lequel l'anode comporte un substrat transparent, une électrode transparente formée sur le substrat transparent, des matériaux luminophores de couleurs sur une portion de l'électrode transparente, et une matrice à fond noir interposée entre des matériaux luminophores adjacents.

16. Dispositif à émission de champ selon l'une des revendications 1 à 15, dans lequel la cathode, la grille de suppression d'émission de champ et la grille d'induction d'émission de champ sont supportées par des espaceurs afin d'être face à l'anode.

17. Dispositif à émission de champ selon l'une des revendications 1 à 16, dans lequel la grille de suppression d'émission de champ est séparée afin de comporter au moins deux ouvertures, et chaque ouverture de la grille de suppression d'émission de champ comporte à l'intérieur l'émetteur de champ électrique (130).

18. Dispositif à émission de champ selon l'une des revendications 1 à 17, comportant des moyens pour appliquer un champ électrique à la grille d'induction d'émission de champ afin de permettre aux électrons d'être émis par l'émetteur de champ électrique, et comportant des moyens pour appliquer un champ électrique à la grille de suppression d'émission de champ dans une direction opposée à celle du champ électrique induit à l'émetteur de champ électrique en raison de la grille d'induction d'émission de champ afin de supprimer l'émission d'électrons par l'émetteur de champ électrique.
